# EUROPEAN PATENT SPECIFICATION

(11) **EP 2 248 707 B1**
(45) Date of publication and mention of the grant of the patent: **10.07.2013**
(21) Application number: 08748483.8
(22) Date of filing: 09.05.2008
(51) Int. Cl.: B62B 7/06, B62B 7/08

(54) **BABY BUGGY**
KINDERWAGEN
POUSSETTE

(30) Priority: 05.02.2008 CN 200820031484 U
(43) Date of publication of application: 10.11.2010
(73) Proprietor: Goodbaby Child Products Co., Ltd., Jiangsu 215-331 (CN)
(72) Inventor: WANG, Junma, Jiangsu 215331 (CN)
(74) Representative: De Vries & Metman
(86) International application number: PCT/CN2008/000925
(87) International publication number: WO 2009/100601

(56) References cited:
- EP-A2- 1 445 167
- CN-A- 1 136 910
- CN-A- 101 284 542
- CN-Y- 2 418 075
- CN-Y- 2 623 558
- DE-U1-202004 002 298
- GB-A- 2 107 653
- JP-A- 2005 247 218
- JP-A- 2005 247 218

## Description

### Field of the Invention

The present invention relates to a foldable baby buggy.

### Description of the Related Art

To improve the portability of the foldable baby buggy of the prior art, generally, it is desired to minimize the folded volume thereof. Owning to the relative location between the rods of the buggy frame is not appropriately arranged, some of the buggy frames meet the demand of low folded volume, while the push rod can not be straight up and the front and rear wheels can not support the buggy, difficult for the users to take. The others achieve to support themselves after folded; however, they generally possess a high folded volume, inconvenient for transportation.

A baby buggy according to the preamble of claim 1 is shown by GB 2107653 A.

### Summary of the invention

The object of the present invention is to provide such a baby buggy that the upper end of the push rod remains straight up and the front and rear wheels support the buggy frame, and that possesses a low folded volume after the buggy frame is folded.

In order to obtain one or more of these objects, the invention as defined in claim 1 provides:
a baby buggy, comprising a buggy frame provided with an unfolded position and a folded position, front wheel assemblies, rear wheel assemblies, and a locking mechanism for locking the buggy frame in the unfolded position. The locking mechanism is generally disposed between two rods as long as it could lock the buggy frame, without the limitation to which two rods. The buggy frame comprises:
a first front wheel bracket, a second front wheel bracket, a first rear wheel bracket and a second rear wheel bracket;
a first hand rail, wherein, two components out of the upper section of the first front wheel bracket, the upper section of the first rear wheel bracket and the front section of the first hand rail are rotatablely connected about the axis a, the other component is rotatablely connected to one of the two rotatablely connected components about the axis a'. Wherein the axis a and a' could be the same one axis, as well as the two axes parallel with each other;
a second hand rail, wherein, two components out of the upper section of the second front wheel bracket, the upper section of the second rear wheel bracket and the front section of the second hand rail are rotatablely connected about the axis a, the other component is rotatablely connected to one of the two rotatablely connected components about the axis a'. Wherein the axis a and a' could be one same axis, as well as two axes parallel with each other;
a first push rod, which is rotatablely connected to the back section of the first hand rail;
a second push rod, which is rotatablely connected to the back section of the second hand rail;
wherein, the axis a and a' are parallel with each other.

The buggy frame further comprises:
a first swing rod, the back section of which is rotatablely connected to the first push rod, and, the approximate central section of which is rotatablely connected to the first rear wheel bracket;
a second swing rod, the back section of which is rotatablely connected to the second push rod, and, the approximate central section of which is rotatablely connected to the second rear wheel bracket;
a first connecting rod, the front end of which is rotatablely connected to the first front wheel bracket , and, the back end of which is rotatablely connected to the first swing rod;
a second connecting rod, the front end of which is rotatablely connected to the second front wheel bracket, and, the back end of which is rotatablely connected to the second swing rod;
a foldable front supporting frame for reducing the lateral dimension of the buggy frame, comprising a first supporting rod and a second supporting rod that intersect and rotatablely connect with each other at the intersection joint. One end of the first supporting rod is rotatablely arranged to the lower section of the first front wheel bracket through a first adapter, the other end to the second swing rod or the second connecting rod through a fourth adapter. One end of the second supporting rod is rotatablely arranged to the second front wheel bracket through a second adapter, the other end to the first swing rod or the first connecting rod through a third adapter. The function of the front supporting frame is for the buggy frame to present a high lateral rigidity when in a unfolded position, not affecting the folding of the buggy frame; and
a foldable rear supporting frame for reducing the lateral dimension of the buggy frame, which could either be disposed between the first rear wheel bracket, the second rear wheel bracket, the first push rod, and the second push rod, or be disposed between the first rear wheel bracket, the second rear wheel bracket, the first swing rod, and the second swing rod, or simply between the first rear wheel bracket and the second rear wheel bracket. The structure of the rear supporting frame is not limited as long as it presents a high lateral rigidity when the buggy frame in a unfolded position and not affects the folding of the buggy frame.

The lateral direction of the buggy frame is accordant with the extending direction of the axis a. To fold the buggy frame, the locking mechanism should first be unlocked, and then the first push rod and the second push rod can be pressed downwardly at the same time, While the operation of the two push rods induces rotation of the first swing rod and the second swing rod, i.e., the back sections of the first swing rod and the second swing rod respectively move downwardly, while the front sections of the first swing rod and the second swing rod respectively move upwardly, leading to the back ends of the first connecting rod and the second connecting rod moving upwardly, thus further resulting in the first front wheel bracket moves towards the first rear wheel bracket, and the second front wheel bracket moves towards the second rear wheel bracket, consequently inducing the folding of the front supporting frame and the rear supporting frame. Finally, the vertical dimension, the longitudinal dimension and the lateral dimension of the buggy frame decrease, and the buggy frame is in a folded status.

A foldable cross piece for reducing the lateral dimension of the buggy frame is disposed between the first push rod and the second push rod. One outer end of the cross piece is rotatablely connected to the upper section of the first push rod, the other outer end to the upper section of the second push rod. The cross piece consists of two rods with the inner ends rotatablely connected. Alternatively, the cross piece can also consist of three rods successively rotatablely connected.

The rear supporting frame comprises a third supporting rod and a fourth supporting rod that intersect and rotatablely connect with each other at the intersection joint. One end of the third supporting rod is rotatablely arranged to the first rear wheel bracket through a seventh adapter, the other end to the second swing rod or the lower section of the second push rod through a sixth adapter. One end of the fourth supporting rod is rotatablely arranged to the second rear wheel bracket through an eighth adapter, the other end to the first swing rod or the lower section of the first push rod through a fifth adapter.

One end of the third supporting rod is rotatablely connected to the approximate central section of the first rear wheel bracket. One end of the fourth supporting rod is rotatablely connected to the approximate central section of the second rear wheel bracket.

The rotary connection joint of the first connecting rod and the first front wheel bracket is disposed above the rotary arrangement joint of the first supporting rod and the first front wheel bracket. The rotary connection joint of the second connecting rod and the second front wheel bracket is disposed above the rotary arrangement joint of the second supporting rod and the second front wheel bracket.

The first swing rod extends forwards from the rotary connection joint of the first swing rod and the first connecting rod forming a first seat rod. The second swing rod extends forwards from the rotary connection joint of the second swing rod and the second connecting rod forming a second seat rod. Preferably, the first connecting rod and the second connecting rod could also serve as the seat rods.

The rotary connection joint of the first connecting rod and the first swing rod is positioned to a location that lies between the rotary arrangement joint of the second supporting rod and the first swing rod and the rotary connection joint of the first rear wheel bracket and the first swing rod. The rotary connection joint of the second connecting rod and the second swing rod is positioned to a location that lies between the rotary arrangement joint of the first supporting rod and the second swing rod and the rotary connection joint of the second rear wheel bracket and the second swing rod.

The rotary connection joint of the first rear wheel bracket and the first swing rod is positioned to a location that lies between the rotary connection joint of the first connecting rod and the first swing rod and that of the first push rod and the first swing rod. The rotary connection joint of the second rear wheel bracket and the second swing rod is positioned to a location that lies between the rotary connection joint of the second connecting rod and the second swing rod and that of the second push rod and the second swing rod.

The front end of the first connecting rod is rotatablely connected to the approximate central section of the first front wheel bracket. The front end of the second connecting rod is rotatablely connected to the approximate central section of the second front wheel bracket.

Preferably, the axis a is coincide with the axis a'.

The present invention has the advantages that, the upper end of the push rod remains straight up and the front and rear wheels support the buggy frame, namely, the buggy frame can support themselves after folded owning to the appropriate relative location between the rods of the buggy frame, and the folded buggy is also convenient for the users to take and for transportation owning to the low folded volume after the buggy frame folded.

### Brief description of the drawings

Fig. 1 is a perspective view of the preferred embodiment according to the present invention in an unfolded status.
Fig. 2 is a side view of the preferred embodiment according to the present invention in an unfolded status.
Fig. 3 is a perspective view of the preferred embodiment according to the present invention in a folded status.
Fig. 4 is a side view of the preferred embodiment according to the present invention in a folded status.

### Detailed description of the preferred embodiments

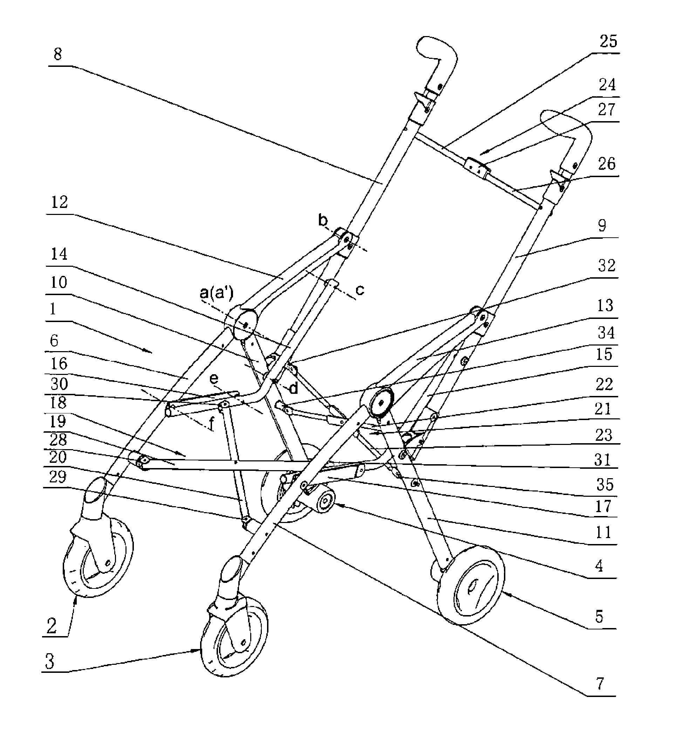

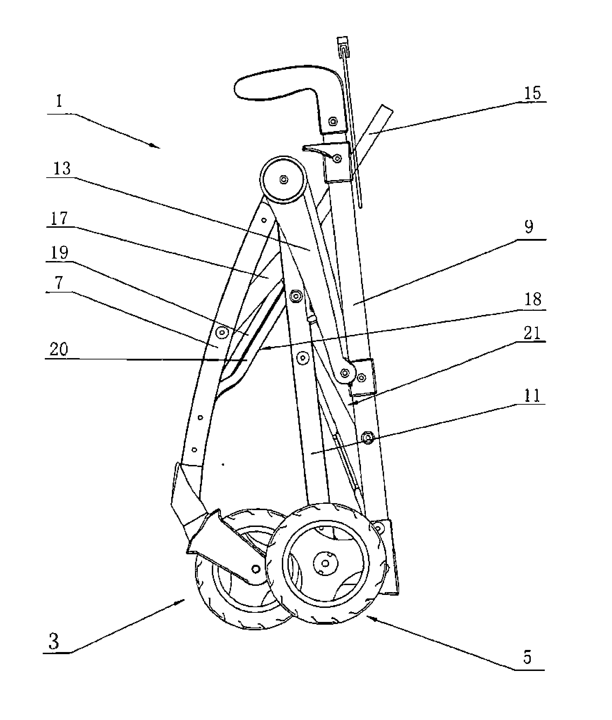

As shown in Figs. 1 to 4, a baby buggy, comprises a buggy frame 1 provided with an unfolded position and a folded position, front wheel assemblies, rear wheel assemblies, and a locking mechanism for locking the buggy frame in the unfolded position. The buggy frame 1 comprises
a first front wheel bracket 6, the lower end of which is provided with first front wheel assemblies 2;
a second front wheel bracket 7, the lower end of which is provided with second front wheel assemblies 3;
a first rear wheel bracket 10, the lower section of which is provided with first rear wheel assemblies 4;
a second rear wheel bracket 11, the lower section of which is provided with second rear wheel assemblies 5; wherein, the upper end of the first front wheel bracket 6, the upper end of the first rear wheel bracket 10 and the front section of a first hand rail 12 are rotatablely and coaxially connected; and the second front wheel bracket 7, the upper end of the second rear wheel bracket 11 and the front section of the second hand rail 13 are rotatablely and coaxially connected;
a first push rod 8, which is rotatablely connected to the back section of the first hand rail 12 about the axis b, and, between the lower end of which and the first rear wheel bracket 10 arranges a locking mechanism probably comprising a spring tongue arranged at the lower end of the first push rod 8 and a locking slot grooved on the first rear wheel bracket 10, with the spring tongue inserting into the locking slot when locked and departing from the locking slot when unlocked;
a second push rod 9, which is rotatablely connected to the back section of the second hand rail 13 about the axis b, and similarly, between the lower end of which and the second rear wheel bracket 11 arranges a locking mechanism probably comprising a spring tongue arranged at the lower end of the second push rod 9 and a locking slot grooved on the second rear wheel bracket 11, with the spring tongue inserting into the locking slot when locked and departing from the locking slot when unlocked;
a first swing rod 14, the back section of which is rotatablely connected to the first push rod 8 about the axis c, and, the approximate central section of which is rotatablely connected to the first rear wheel bracket 10 about the axis d;
a second swing rod 15, the back section of which is rotatablely connected to the second push rod 9 about the axis c, and, the approximate central section of which is rotatablely connected to the second rear wheel bracket 11 about the axis d;
a first connecting rod 16, the front end of which is rotatablely connected to the first front wheel bracket 6 about the axis f, and, the back end of which is rotatablely connected to the first swing rod 14 about the axis e;
a second connecting rod 17, the front end of which is rotatablely connected to the second front wheel bracket 7 about the axis f, and, the back end of which is rotatablely connected to the second swing rod 15 about the axis e;
wherein the axes a,b,c,d,e and f are parallel to each other.

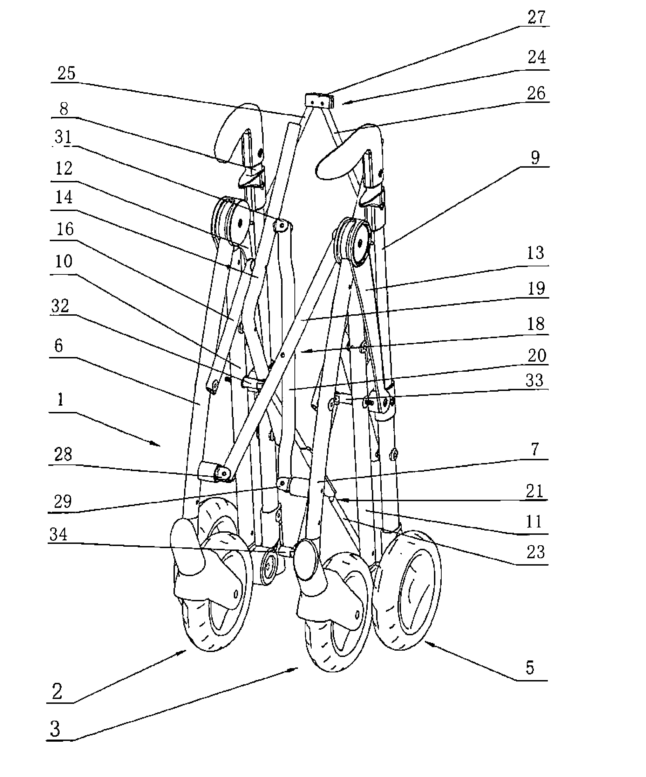

As shown in Fig. 1 and Fig. 3, the foldable front supporting frame 18 for reducing the lateral dimension of the buggy frame comprises a first supporting rod 19 and a second supporting rod 20 that intersect and rotatablely connect with each other at the intersection joint. One end of the first supporting rod 19 is rotatablely arranged to the lower section of the first front wheel bracket 6 through a first adapter 28, the other end to the second swing rod 15 through a fourth adapter 31. One end of the second supporting rod 20 is rotatablely arranged to the second front wheel bracket 7 through a second adapter 29, the other end to the first swing rod 14 through a third adapter 30.

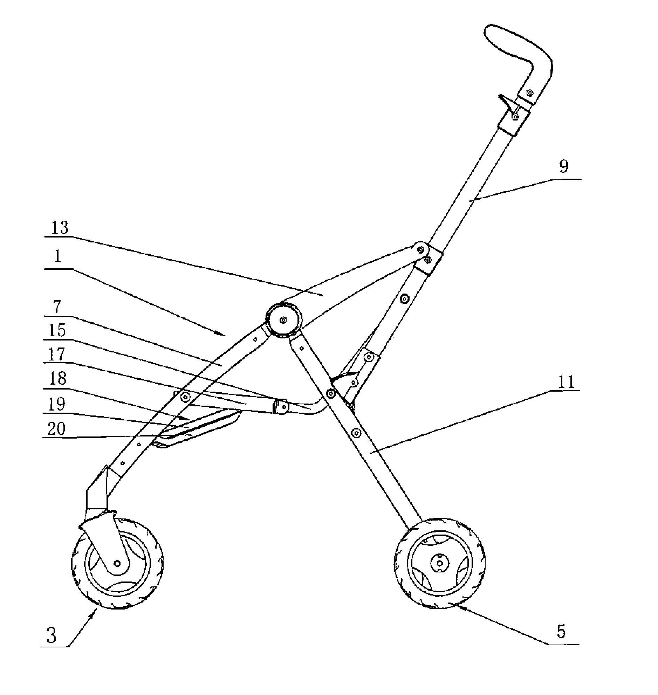

As shown in Fig. 1 and Fig. 2, the foldable rear supporting frame 21 for reducing the lateral dimension of the buggy frame comprises a third supporting rod 22 and a fourth supporting rod 23 that intersect and rotatablely connect with each other at the intersection joint. One end of the third supporting rod 22 is rotatablely arranged to the first rear wheel bracket 10 through a seventh adapter 34, the other end to the lower end of the second push rod 9 through a sixth adapter 33. One end of the fourth supporting rod 23 is rotatablely arranged to the second rear wheel bracket 11 through an eighth adapter 35, the other end to the lower end of the first push rod 8 through a fifth adapter 32. The rear supporting frame could also simply be arranged between the first rear wheel bracket 10 and the second rear wheel bracket 11. For instance, the rear supporting frame comprises a first rod and a second rod such that one disposes above the other with the outer ends respectively rotatablely connected to the first rear wheel bracket 10, a third rod and a fourth rod such that one disposes above the other with the outer ends respectively rotatablely connected to the second rear wheel bracket 11, and a fifth rod. The inner ends of the first rod and the third rod are respectively rotatablely connected to the upper section of the fifth rod. The inner ends of the second rod and the fourth rod are respectively rotatablely connected to the lower section of the fifth rod. A locking mechanism is arranged on the rear supporting frame for locking the rear supporting frame.

A foldable cross piece 24 is arranged between the first push rod 8 and the second push rod 9, one outer end of which is rotatablely connected to the upper section of the first push rod 8, the other to the upper section of the second push rod 9.

The cross piece 24 comprises a first cross rod 25 with the outer end rotatablely connected to the upper section of the first push rod 8, a second cross rod 26 with the outer end rotatablely connected to the upper section of the second push rod 9, and a cross rod connector 27. The inner end of the first cross rod 25 is rotatablely connected to one end of the cross rod connector 27, and the inner end of the second cross rod 26 to the other end of the cross rod connector 27.

The rotary connection joint of the first connecting rod 16 and the first front wheel bracket 6 is disposed above the rotary arrangement joint of the first supporting rod 19 and the first front wheel bracket 6. The rotary connection joint of the second connecting rod 17 and the second front wheel bracket 7 is disposed above the rotary arrangement joint of the second supporting rod 20 and the second front wheel bracket 7.

The first swing rod 14 extends forwards from the rotary connection joint of the first swing rod 14 and the first connecting rod 16 forming a first seat rod. The second swing rod 15 extends forwards from the rotary connection joint of the second swing rod 15 and the second connecting rod 17 forming a second seat rod.

The rotary connection joint of the first connecting rod 16 and the first swing rod 14 is positioned to a location that lies between the rotary arrangement joint of the second supporting rod 20 and the first swing rod 14 and the rotary connection joint of the first rear wheel bracket 10 and the first swing rod 14. The rotary connection joint of the second connecting rod 17 and the second swing rod 15 is positioned to a location that lies between the rotary arrangement joint of the first supporting rod 19 and the second swing rod 15 and the rotary connection joint of the second rear wheel bracket 11 and the second swing rod 15.

The rotary connection joint of the first rear wheel bracket 10 and the first swing rod 14 is positioned to a location that lies between the rotary connection joint of the first connecting rod 16 and the first swing rod 14 and that of the first push rod 8 and the first swing rod 14. The rotary connection joint of the second rear wheel bracket 11 and second swing rod 15 is positioned to a location that lies between the rotary connection joint of the second connecting rod 17 and the second swing rod 15 and that of the second push rod 9 and the second swing rod 15.

The front end of the first connecting rod 16 is rotatablely connected to the approximate central section of the first front wheel bracket 6. The front end of the second connecting rod 17 is rotatablely connected to the approximate central section of the second front wheel bracket 7.

One end of the third supporting rod 22 is rotatablely connected to the approximate central section of the first rear wheel bracket 10. One end of the fourth supporting rod 23 is rotatablely connected to the approximate central section of the second rear wheel bracket 11.

## Claims

1. A baby buggy, comprising a buggy frame (1) provided with an unfolded position and a folded position, front wheel assemblies, rear wheel assemblies, and a locking mechanism for locking said buggy frame in the unfolded position, said buggy frame (1) comprising:
a first front wheel bracket (6), a second front wheel bracket (7), a first rear wheel bracket (10) and a second rear wheel bracket (11);
a first hand rail (12), two components out of the upper section of said first front wheel bracket (6), the upper section of said first rear wheel bracket (10) and the front section of said first hand rail (12) being rotatablely connected about a first axis (a), the other component being rotatablely connected to one of said two rotatablely connected components about a second axis (a');
a second hand rail (13), two components out of the upper section of said second front wheel bracket (7), the upper section of said second rear wheel bracket (11) and the front section of said second hand rail (13) being rotatablely connected about the first axis (a), the other component being rotatablely connected to one of said two rotatablely connected components about the second axis (a');
a first push rod (8), which is rotatablely connected to the back section of said first hand rail (12);
a second push rod (9), which is rotatablely connected to the back section of said second hand rail (13);
said first and second axis (a, a') being parallel with each other,
**characterized by**
a first swing rod (14), the back section of which is rotatablely connected to said first push rod (8), and, the approximate central section of which is rotatablely connected to said first rear wheel bracket (10);
a second swing rod (15), the back section of which is rotatablely connected to said second push rod (9), and, the approximate central section of which is rotatablely connected to said second rear wheel bracket (11);
a first connecting rod (16), the front end of which is rotatablely connected to said first front wheel bracket (6), and, the back end of which is rotatablely connected to said first swing rod (14);
a second connecting rod (17), the front end of which is rotatablely connected to said second front wheel bracket (7), and, the back end of which is rotatablely connected to said second swing rod (15);
a foldable front supporting frame (18) for reducing the lateral dimension of said buggy frame (1), comprising a first supporting rod (19) and a second supporting rod (20) that intersect and rotatablely connect with each other at the intersection joint, one end of said first supporting rod (19) being rotatablely arranged to the lower section of said first front wheel bracket (6) through a first adapter (28), the other to said second swing rod (15) or said second connecting rod (17) through a fourth adapter (31); one end of said second supporting rod (20)being rotatablely arranged to said second front wheel bracket (7) through a second adapter (29), the other to said first swing rod (14) or said first connecting rod (16) through a third adapter (30);
a foldable rear supporting frame (21) for reducing the lateral dimension of said buggy frame (1), which could either be disposed between said first rear wheel bracket (10), said second rear wheel bracket (11), said first push rod (8), and said second push rod (9), or be disposed between said first rear wheel bracket (10), said second rear wheel bracket (11), said first swing rod (14), and said second swing rod (15), or simply between said first rear wheel bracket (10) and said second rear wheel bracket (11).

2. The baby buggy as claimed in claim 1, wherein, a foldable cross piece (24) for reducing the lateral dimension of the buggy frame (1) is disposed between the first push rod (8) and the second push rod (9), one outer end of the cross piece (24) being rotatablely connected to the upper section of the first push rod (8), the other end to the upper section of the second push rod (9).

3. The baby buggy as claimed in claim 1, wherein, the rear supporting frame (21) comprises a third supporting rod (22) and a fourth supporting rod (23) that intersect and rotatablely connect with each other at the intersection joint, one end of said third supporting rod (22) being rotatablely arranged to the first rear wheel bracket (10) through a seventh adapter (34), the other to the second swing rod (15) or the lower section of the second push rod (9) through a sixth adapter (33); one end of said fourth supporting rod (23) being rotatablely arranged to the second rear wheel bracket (11) through an eighth adapter (35), the other to the first swing rod (8) or the lower section of the first push rod (14) through a fifth adapter (32).

4. The baby buggy as claimed in claim 3, wherein one end of the third supporting rod (22) is rotatablely connected to the approximate central section of first rear wheel bracket (10), with one end of the fourth supporting rod (23) being rotatablely connected to the approximate central section of second rear wheel bracket (11).

5. The baby buggy as claimed in claim 1, wherein the rotary connection joint of the first connecting rod (16) and the first front wheel bracket (6) is disposed above the rotary arrangement joint of the first supporting rod (19) and the first front wheel bracket (6), with the rotary connection joint of the second connecting rod (17) and the second front wheel bracket (7) being disposed above the rotary arrangement joint of the second supporting rod (20) and the second front wheel bracket (7).

6. The baby buggy as claimed in claim 1, wherein, the first swing rod (14) extends forwards from the rotary connection joint of the first swing rod (14) and the first connecting rod (16) forming a first seat rod, with the second swing rod (15) extending forwards from the rotary connection joint of the second swing rod (15) and the second connecting rod (17) forming a second seat rod.

7. The baby buggy as claimed in claim 1, wherein, the rotary connection joint of the first connecting rod (16) and the first swing rod (14) is positioned to a location that lies between the rotary arrangement joint of the second supporting rod (20) and the first swing rod (14) and the rotary connection joint of the first rear wheel bracket (10) and the first swing rod (14), with the rotary connection joint of the second connecting rod (17) and the second swing rod (15) being positioned to a location that lies between the rotary arrangement joint of the first supporting rod (19) and the second swing rod (15) and the rotary connection joint of the second rear wheel bracket (11) and the second swing rod (15).

8. The baby buggy as claimed in claim 1, wherein, the rotary connection joint of the first rear wheel bracket (10) and the first swing rod (14) is positioned to a location that lies between the rotary connection joint of the first connecting rod (16) and the first swing rod (14) and that of the first push rod (8) and the first swing rod (14), with the rotary connection joint of the second rear wheel bracket (11) and the second swing rod (15) being positioned to a location that lies between the rotary connection joint of the second connecting rod (17) and the second swing rod (15) and that of the second push rod (9) and the second swing rod (15).

9. The baby buggy as claimed in claim 1, wherein, the front end of the first connecting rod (16) is rotatablely connected to the approximate central section of the first front wheel bracket (6), with the front end of the second connecting rod (17) being rotatablely connected to the approximate central section of the second front wheel bracket (7).

10. The baby buggy as claimed in claim 1, wherein, the axis a is coincide with the axis a'.

## Patentansprüche

1. Kinderwagen, der aufweist: ein Kinderwagengestell (1), das mit einer ausgeklappten und einer geklappten Stellung versehen ist, Vorderradanordnungen, Hinterradanordnungen und einen Arretiermechanismus zum Arretieren des Kinderwagengestells in der aufgeklappten Stellung, wobei das Kinderwagengestell (1) aufweist:
eine erste Vorderradhalterung (6), eine zweite Vorderradhalterung (7), eine erste Hinterradhalterung (10) und eine zweite Hinterradhalterung (11);
einen ersten Handlauf (12), wobei zwei Komponenten aus dem oberen Abschnitt der ersten Vorderradhalterung (6), dem oberen Abschnitt der ersten Hinterradhalterung (10) und dem vorderen Abschnitt des ersten Handlaufs (12) um eine erste Achse (a) drehbar verbunden sind, wobei die andere Komponente mit einer der zwei drehbar verbundenen Komponenten drehbar um eine zweite Achse (a') verbunden ist;
einen zweiten Handlauf (13), wobei zwei Komponenten aus dem oberen Abschnitt der zweiten Vorderradhalterung (7), dem oberen Abschnitt der zweiten Hinterradhalterung (11) und dem vorderen Abschnitt des zweiten Handlaufs (13) drehbar um die erste Achse (a) verbunden sind, wobei die andere Komponente mit einer der zwei drehbar verbundenen Komponenten um eine zweite Achse (a') drehbar verbunden ist;
eine erste Schubstange (8), die mit dem hinteren Abschnitt des ersten Handlaufs (12) drehbar verbunden ist;
eine zweite Schubstange (9), die mit dem hinteren Abschnitt des zweiten Handlaufs (13) drehbar verbunden ist;
wobei die erste und zweite Achse (a, a') parallel zueinander sind,
**gekennzeichnet durch**
eine erste Schwenkstange (14), deren hinterer Abschnitt mit der ersten Schubstange (8) drehbar verbunden ist, und deren ungefähr mittlerer Abschnitt mit der ersten Hinterradhalterung (10) drehbar verbunden ist;
eine zweite Schwenkstange (15), deren hinterer Abschnitt mit der zweiten Schubstange (9) drehbar verbunden ist, und deren ungefähr mittlerer Abschnitt mit der zweiten Hinterradhalterung (11) drehbar verbunden ist;
eine erste Verbindungsstange (16), deren vorderes Ende mit der ersten Vorderradhalterung (6) drehbar verbunden ist, und deren hinteres Ende mit der ersten Schwenkstange (14) drehbar verbunden ist;
eine zweite Verbindungsstange (17), deren vorderes Ende mit der zweiten Vorderradhalterung (7) drehbar verbunden ist, und deren hinteres Ende mit der zweiten Schwenkstange (15) drehbar verbunden ist;
ein klappbares Haltegestell (18) zum Verringern der seitlichen Abmessung des Kinderwagengestells (1), das eine erste Haltestange (19) und eine zweite Haltestange (20) aufweist, die sich schneiden und an dem Schnittpunkt drehbar miteinander verbunden sind, wobei ein Ende der ersten Haltestange (19) **durch** ein erstes Passstück (28) an dem unteren Abschnitt der ersten Vorderradhalterung (6) und das andere durch ein viertes Passstück (31) an der zweiten Schwenkstange (15) oder der zweiten Verbindungsstange (17) drehbar angeordnet ist; wobei ein Ende der zweiten Haltestange (20) durch ein zweites Passstück (29) an der zweiten Vorderradhalterung (7) und das andere **durch** ein drittes Passstück (30) an der ersten Schwenkstange (14) oder der ersten Verbindungsstange (16) drehbar angeordnet ist;
ein klappbares hinteres Haltegestell (21) zum Verringern der seitlichen Abmessung des Kinderwagengestells (1), das entweder zwischen der ersten Hinterradhalterung (10), der zweiten Hinterradhalterung (11), der ersten Schubstange (8) und der zweiten Schubstange (9) angeordnet, oder zwischen der ersten Hinterradhalterung (10), der zweiten Hinterradhalterung (11), der ersten Schwenkstange (14) und der zweiten Schwenkstange (15) oder einfach zwischen der ersten Hinterradhalterung (10) und der zweiten Hinterradhalterung (11) angeordnet sein könnte.

2. Kinderwagen nach Anspruch 1, wobei ein klappbares Querstück (24) zum Verringern der seitlichen Abmessung des Kinderwagengestells (1) zwischen der ersten Schubstange (8) und der zweiten Schubastange (9) angeordnet ist, wobei ein äußeres Ende des Querstücks (24) mit dem oberen Abschnitt der ersten Schubstange (8), das andere Ende mit dem oberen Abschnitt der zweiten Schubstange (9) drehbar verbunden ist.

3. Kinderwagen nach Anspruch 1, wobei der hintere Halterahmen (21) eine dritte Haltestange (22) und eine vierte Haltestange (23) aufweist, die sich schneiden und an dem Schnittpunkt drehbar verbunden sind, wobei ein Ende der dritten Haltestange (22) durch ein siebtes Passstück (34) an der ersten Hinterradhalterung (10), das andere durch ein sechstes Passstück (33) an der zweiten Schwenkstange (15) oder dem unteren Abschnitt der zweiten Schubstange (9) drehbar angeordnet ist; ein Ende der vierten Haltestange (23) durch ein achtes Passstück (35) an der zweiten Hinterradhalterung (11), das andere durch ein fünftes Passstück (32) an der ersten Schwenkstange (8) oder dem unteren Abschnitt der ersten Schubstange (14) drehbar angeordnet ist.

4. Kinderwagen nach Anspruch 3, wobei ein Ende der dritten Haltestange (22) mit dem ungefähr mittleren Abschnitt der ersten Hinterradhalterung (10) drehbar verbunden ist, wobei ein Ende der vierten Haltestange (23) mit dem ungefähr mittleren Abschnitt der zweiten Hinterradhalterung (11) drehbar verbunden ist.

5. Kinderwagen nach Anspruch 1, wobei das Drehverbindungsgelenk der ersten Verbindungsstange (16) und der ersten Vorderradhalterung (6) über dem Drehanordnungsgelenk der ersten Haltestange (19) und der ersten Vorderradhalterung (6) angeordnet ist, wobei das Drehverbindungsgelenk der zweiten Verbindungsstange (17) und der zweiten Vorderradhalterung (7) über dem Drehanordnungsgelenk der zweiten Haltestange (20) und der zweiten Vorderradhalterung (7) angeordnet ist.

6. Kinderwagen nach Anspruch 1, wobei die erste Schwenkstange (14) sich von dem Drehverbindungsgelenk der ersten Schwenkstange (14) vorwärts erstreckt und die erste Verbindungsstange (16) eine erste Sitzstange bildet, wobei die zweite Schwenkstange (15) sich von dem Drehverbindungsgelenk der zweiten Schwenkstange (15) vorwärts erstreckt und die zweite Verbindungsstange (17) eine zweite Sitzstange bildet.

7. Kinderwagen nach Anspruch 1, wobei das Drehverbindungsgelenk der ersten Verbindungsstange (16) und der ersten Schwenkstange (14) an einer Stelle positioniert ist, die zwischen dem Drehanordnungsgelenk der zweiten Haltestange (20) und der ersten Schwenkstange (14) und dem Drehverbindungsgelenk der ersten Hinterradhalterung (10) und der ersten Schwenkstange (14) liegt, wobei das Drehverbindungsgelenk der zweiten Verbindungsstange (17) und der zweiten Schwenkstange (15) an einer Stelle positioniert ist, die zwischen dem Drehanordnungsgelenk der ersten Haltestange (19) und der zweiten Schwenkstange (15) und dem Drehverbindungsgelenk der zweiten Hinterradhalterung (11) und der zweiten Schwenkstange (15) liegt.

8. Kinderwagen nach Anspruch 1, wobei das Drehverbindungsgelenk der ersten Hinterradhalterung (10) und der ersten Schwenkstange (14) an einer Stelle positioniert ist, die zwischen dem Drehverbindungsgelenk der ersten Verbindungsstange (16) und der ersten Schwenkstange (14) und dem der ersten Schubstange (8) und der ersten Schwenkstange (14) liegt, wobei das Drehverbindungsgelenk der zweiten Hinterradhalterung (11) und der zweiten Schwenkstange (15) an einer Stelle positioniert ist, die zwischen dem Drehverbindungsgelenk der zweiten Verbindungsstange (17) und der zweiten Schwenkstange (15) und dem der zweiten Schubstange (9) und der zweiten Schwenkstange (15) liegt.

9. Kinderwagen nach Anspruch 1, wobei das vordere Ende der ersten Verbindungsstange (16) mit einem ungefähr mittleren Abschnitt der ersten Vorderradhalterung (6) drehbar verbunden ist, wobei das vordere Ende der zweiten Verbindungsstange (17) mit dem ungefähr mittleren Abschnitt der zweiten Vorderradhalterung (7) drehbar verbunden ist.

10. Kinderwagen nach Anspruch 1, wobei die Achse a mit der Achse a' zusammenfällt.

## Revendications

1. Poussette comprenant un cadre de poussette (1) prévu avec une position dépliée et une position pliée, des ensembles de roues avant, des ensembles de roues arrière, et un mécanisme de verrouillage pour verrouiller ledit cadre de poussette dans la position dépliée, ledit cadre de poussette (1) comprenant :
un premier support de roue avant (6), un second support de roue avant (7), un premier support de roue arrière (10) et un second support de roue arrière (11) ;
un premier garde-corps (12), deux composants hors de la section supérieure dudit premier support de roue avant (6), la section supérieure dudit premier support de roue arrière (10) et la section avant dudit premier garde-corps (12) étant raccordés en rotation autour d'un premier axe (a), l'autre composant étant raccordé en rotation à l'un desdits deux composants raccordés en rotation autour d'un second axe (a') ;
un second garde-corps (13), deux composants hors de la section supérieure dudit second support de roue avant (7), la section supérieure dudit second support de roue arrière (11) et la section avant dudit second garde-corps (13) étant raccordés en rotation autour du premier axe (a), l'autre composant étant raccordé en rotation à l'un desdits deux composants raccordés en rotation autour du second axe (a') ;
une première tige de poussée (8) qui est raccordée en rotation à la section arrière dudit premier garde-corps (12) ;
une seconde tige de poussée (9) qui est raccordée en rotation à la section arrière dudit second garde-corps (13) ;
lesdits premier et second axes (a, a') étant parallèles entre eux,
**caractérisée par** :
une première tige oscillante (14), dont la section arrière est raccordée en rotation à ladite première tige de poussée (8) et, dont la section approximativement centrale est raccordée audit premier support de roue arrière (10) ;
une seconde tige oscillante (15), dont la section arrière est raccordée en rotation à ladite seconde tige de poussée (9), et dont la section approximativement centrale est raccordée en rotation audit second support de roue arrière (11) ;
une première tige de raccordement (16), dont l'extrémité avant est raccordée en rotation audit premier support de roue avant (6) et, dont l'extrémité arrière est raccordée en rotation à ladite première tige oscillante (14) ;
une seconde tige de raccordement (17), dont l'extrémité avant est raccordée en rotation audit second support de roue avant (7), et dont l'extrémité arrière est raccordée en rotation à ladite seconde tige oscillante (15) ;
un cadre de support avant pliable (18) pour réduire la dimension latérale dudit cadre de poussette (1), comprenant une première tige de support (19) et une deuxième tige de support (20) qui se croisent et se raccordent en rotation l'une par rapport à l'autre au niveau du joint d'intersection, une extrémité de ladite première tige de support (19) étant agencée en rotation sur la section inférieure dudit premier support de roue avant (6) par le biais d'un premier adaptateur (28), l'autre parmi ladite seconde tige oscillante (15) ou ladite seconde tige de raccordement (17) par le biais d'un quatrième adaptateur (31) ; une extrémité de ladite deuxième tige de support (20) étant agencée en rotation sur ledit second support de roue avant (7) par le biais d'un deuxième adaptateur (29), l'autre parmi ladite première tige oscillante (14) ou ladite première tige de raccordement (16) par le biais d'un troisième adaptateur (30) ;
un cadre de support arrière pliable (21) pour réduire la dimension latérale dudit cadre de poussette (1), qui peut être disposé entre ledit premier support de roue arrière (10), ledit second support de roue arrière (11), ladite première tige de poussée (8) et ladite seconde tige de poussée (9), ou bien être disposé entre ledit premier support de roue arrière (10), ledit second support de roue arrière (11), ladite première tige oscillante (14) et ladite seconde tige oscillante (15), ou simplement entre ledit premier support de roue arrière (10) et ledit second support de roue arrière (11).

2. Poussette selon la revendication 1, dans laquelle une traverse pliable (24) pour réduire la dimension latérale du cadre de poussette (1) est disposée entre la première tige de poussée (8) et la seconde tige de poussée (9), une extrémité externe de la traverse (24) étant raccordée en rotation à la partie supérieure de la première tige de poussée (8), l'autre extrémité à la section supérieure de la seconde tige de poussée (9).

3. Poussette selon la revendication 1, dans laquelle le cadre de support arrière (21) comprend une troisième tige de support (22) et une quatrième tige de support (23) qui se croisent et se raccordent en rotation entre elles au niveau du joint d'intersection, une extrémité de ladite troisième tige de support (22) étant agencée en rotation sur le premier support de roue arrière (10) par le biais un septième adaptateur (34), l'autre sur la seconde tige oscillante (15) ou la section inférieure de la seconde tige de poussée (9) par le biais d'un sixième adaptateur (33) ; une extrémité de ladite quatrième tige de support (23) étant agencée en rotation sur le second support de roue arrière (11) par le biais d'un huitième adaptateur (35), l'autre sur la première tige oscillante (8) ou la section inférieure de la première tige de poussée (14) par le biais d'un cinquième adaptateur (32).

4. Poussette selon la revendication 3, dans laquelle une extrémité de la troisième tige de support (22) est raccordée en rotation à la section approximativement centrale du premier support de roue arrière (10), avec une extrémité de la quatrième tige de support (23) qui est raccordée en rotation à la section approximativement centrale du second support de roue arrière (11).

5. Poussette selon la revendication 1, dans laquelle le joint de raccordement rotatif de la première tige de raccordement (16) et du premier support de roue avant (6) est disposé au-dessus du joint d'agencement rotatif de la première tige de support (19) et du premier support de roue avant (6), avec le joint de raccordement rotatif de la seconde tige de raccordement (17) et du second support de roue arrière (7) qui est disposé au-dessus du joint d'agencement rotatif de la deuxième tige de support (20) et du second support de roue avant (7).

6. Poussette selon la revendication 1, dans laquelle la première tige oscillante (14) s'étend vers l'avant à partir du joint de raccordement rotatif de la première tige oscillante (14) et de la première tige de raccordement (16) formant une première tige de siège, avec la seconde tige oscillante (15) qui s'étend vers l'avant à partir du joint de raccordement rotatif de la seconde tige oscillante (15) et de la seconde tige de raccordement (17) formant une seconde tige de siège.

7. Poussette selon la revendication 1, dans laquelle le joint de raccordement rotatif de la première tige de raccordement (16) et de la première tige oscillante (14) est positionné dans un emplacement qui se trouve entre le joint d'agencement rotatif de la deuxième tige de support (20) et la première tige oscillante (14) et le joint de raccordement rotatif du premier support de roue arrière (10) et la première tige oscillante (14), avec le joint de raccordement rotatif de la seconde tige de raccordement (17) et la seconde tige oscillante (15) qui est positionné dans un emplacement qui se trouve entre le joint d'agencement rotatif de la première tige de support (19) et la seconde tige oscillante (15) et le joint de raccordement rotatif du second support de roue arrière (11) et de la seconde tige oscillante (15).

8. Poussette selon la revendication 1, dans laquelle le joint de raccordement rotatif du premier support de roue arrière (10) et de la première tige oscillante (14) est positionné dans un emplacement qui se trouve entre le joint de raccordement rotatif de la première tige de raccordement (16) et la première tige oscillante (14) et celui de la première tige de poussée (8) et de la première tige oscillante (14), avec le joint de raccordement rotatif du second support de roue arrière (11) et de la seconde tige oscillante (15) qui est positionné dans un emplacement qui se trouve entre le joint de raccordement rotatif de la seconde tige de raccordement (17) et la seconde tige oscillante (15) et celui de la seconde tige de poussée (9) et de la seconde tige oscillante (15).

9. Poussette selon la revendication 1, dans laquelle l'extrémité avant de la première tige de raccordement (16) est raccordée en rotation à la section approximativement centrale du premier support de roue avant (6) avec l'extrémité avant de la seconde tige de raccordement (17) qui est raccordée en rotation à la section approximativement centrale du second support de roue avant (7).

10. Poussette selon la revendication 1, dans laquelle l'axe a coïncide avec l'axe a'.
